(19) **Europäisches Patentamt / European Patent Office / Office européen des brevets**

(11) **EP 1 324 176 B1**

(12) **FASCICULE DE BREVET EUROPEEN**

(45) Date de publication et mention
de la délivrance du brevet:
**13.07.2011 Bulletin 2011/28**

(51) Int Cl.:
***G06F 1/10*** *(2006.01)*

(21) Numéro de dépôt: **02292945.9**

(22) Date de dépôt: **28.11.2002**

(54) **Procédé et système de sauvegarde d'une horloge locale**

Verfahren und Vorrichtung zur Sicherung einer lokalen Uhr

Method and system for local clock backup

(84) Etats contractants désignés:
**DE FR GB IT**

(30) Priorité: **24.12.2001 FR 0116833**

(43) Date de publication de la demande:
**02.07.2003 Bulletin 2003/27**

(73) Titulaire: **Bull SAS**
**78340 Les Clayes-sous-Bois (FR)**

(72) Inventeur: **Bouchet, Alain**
**95840 Villiers-Adam (FR)**

(74) Mandataire: **Fréchède, Michel et al**
**Cabinet Lavoix**
**2 place d'Estienne d'Orves**
**75441 Paris Cedex 09 (FR)**

(56) Documents cités:
**FR-A- 2 767 935    US-B1- 6 223 228**

EP 1 324 176 B1

**Description**

L'invention concerne un procédé et un système de sauvegarde de l'horloge locale d'un périmètre informatique, configuré sur une plate-forme multicellulaire de ressources informatiques.

Pour le cas d'un système multiprocesseurs, le document FR 2 767 935 A divulgue la manière de synchroniser différents modules par rapport à une date évolutive au cours du temps, en utilisant l'un des processeurs comme processeur maître.

A l'heure actuelle, un des axes d'évolution des matériels et/ou des systèmes informatiques concerne la mise en oeuvre d'une flexibilité maximale de ressources informatiques configurables, au bénéfice d'un utilisateur, disposant localement de ressources informatiques notablement plus réduites.

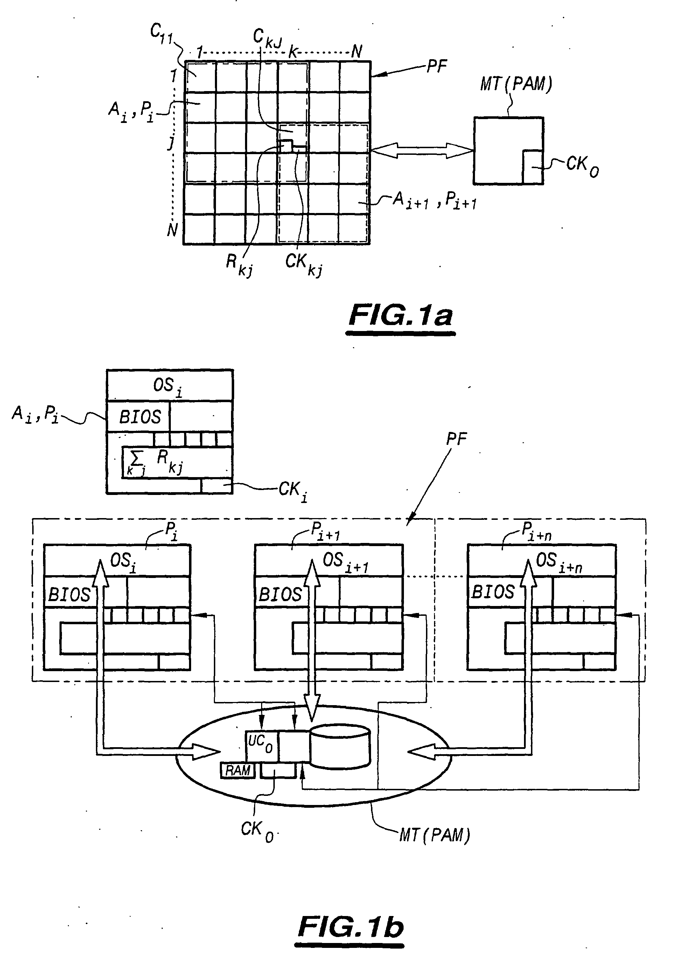

Dans les systèmes informatiques configurables ou reconfigurables actuels, ainsi que représenté en figure 1a, on utilise une plate-forme multicellulaire PF de ressources informatiques, laquelle peut être configurée à partir d'un outil d'administration MT, par un utilisateur, selon un périmètre Pi informatique formé par un nombre donné de cellules, chaque cellule $C_{kj}$ comportant au moins une unité centrale de traitement, des mémoires de travail, et un composant matériel local susceptible de délivrer un signal d'horloge local. Chaque périmètre informatique est géré par un système d'exploitation spécifique multiprocesseur et peut, en conséquence, être configuré par l'utilisateur en vue de l'exécution d'une activité d'exploitation. En général, une activité d'exploitation correspond à une application nécessitant une puissance de calcul spécifique en fonction du type et du volume de données traitées par cette application.

De manière plus particulière, on rappelle que l'outil d'administration peut avantageusement être constitué par un micro-ordinateur connecté en réseau local, étendu à la plate-forme multicellulaire.

Enfin, des ressources communes, telles qu'éléments périphériques, mémoire de masse, de type disque système, peuvent être associées à la plate-forme cellulaire.

De tels systèmes correspondent à des systèmes ou machines, désignées habituellement machines à partition, et permettent normalement d'installer et d'exécuter des activités d'exploitation différentes dans les différentes partitions de la plate-forme. Néanmoins, lorsqu'une telle installation est effectuée, il n'est généralement pas possible de transférer une installation dans une autre partition sans réinstallation ou manipulation physique tout en conservant en outre le contexte d'exécution de l'activité d'exploitation précitée.

En ce qui concerne les mécanismes existants, permettant la reprise dynamique d'activités d'exploitation d'un système informatique par un autre système informatique, muni d'un même système d'exploitation, de tels mécanismes utilisent essentiellement deux systèmes qui doivent impérativement synchroniser leur contexte d'exécution et qui ne partagent uniquement que leurs disques de données et non leur disque système.

Enfin, les mécanismes statiques de reprise d'activité d'exploitation nécessitent soit la réinstallation d'un système équivalent, soit, le cas échéant, le transfert physique de disque système vers un système équivalent, ou encore le recâblage des accès au disque du système remplacé vers un système remplaçant équivalent.

La présente invention a pour objet de remédier à l'ensemble des inconvénients précités des solutions proposées par l'art antérieur connu.

De manière générale, un objet de la présente invention est la mise en oeuvre d'une machine à partition totalement flexible, grâce à laquelle une activité d'exploitation, installée et exécutée sur une partition constitutive d'un périmètre informatique courant configuré sur une plate-forme multicellulaire, peut être rechargée et redémarrée dans un autre périmètre informatique, tout en conservant les paramètres d'environnement essentiels de cette activité d'exploitation, en l'absence de toute intervention physique.

En particulier, un objet de la présente invention est la mise en oeuvre de processus de rechargement et de redémarrage de toute activité d'exploitation d'un périmètre informatique à un autre périmètre informatique d'une plate-forme multicellulaire, indépendamment et en toute transparence vis-à-vis du système d'exploitation retenu.

De manière plus spécifique, un objet de la présente invention est la mise en oeuvre d'un procédé et d'un système de sauvegarde de l'horloge locale d'un périmètre informatique configuré comme partition d'une plate-forme multicellulaire de ressources informatiques, afin de permettre la conservation des paramètres d'environnement essentiels de toute activité d'exploitation exécutée sur ce périmètre informatique, puis sur tout périmètre informatique distinct configuré sur cette plate-forme multicellulaire.

Le procédé de sauvegarde de l'horloge locale d'un périmètre informatique configuré sur une plate-forme multicellulaire de ressources informatiques dans le cadre d'une activité d'exploitation s'applique à une plate-forme dans laquelle chaque périmètre informatique est géré par un système d'exploitation spécifique et pouvant être configuré par un utilisateur à partir d'un outil d'administration, en vue de l'exécution de l'activité d'exploitation sur au moins un périmètre courant ou sur des périmètres informatiques distincts successifs.

Il est remarquable en ce qu'il consiste à établir, pour l'ensemble constitué par l'outil d'administration et par tous les périmètres informatiques configurables sur cette plate-forme multicellulaire, une horloge de référence absolue.

Pour chaque périmètre informatique courant configuré à la requête d'un utilisateur, auquel est associée une horloge locale courante permettant de gérer une activité d'exploitation à partir du système d'exploitation, il consiste en outre à calculer et mémoriser, pour chaque activité d'exploitation en cours d'exécution sur ce périmètre informatique courant de la plate-forme multicellulaire, un attribut de sauvegarde contenant, outre les paramètres de gestion de l'heure de cette activité d'exploitation, en référence à l'horloge locale courante, un paramètre de décalage temporel des paramètres de gestion de l'heure vis-à-vis de l'horloge de référence absolue.

Lors du rechargement de l'activité d'exploitation pour poursuite d'exécution sur un périmètre informatique suivant, distinct du périmètre informatique courant et auquel est associée une horloge locale suivante, distincte de l'horloge locale courante associée au périmètre informatique courant, il consiste à recalculer les paramètres de gestion de l'heure de l'activité d'exploitation à partir du paramètre de décalage temporel des paramètres de gestion de l'heure vis-à-vis de l'horloge de référence absolue et à actualiser l'horloge locale suivante distincte associée à ce périmètre informatique suivant distinct, préalablement au lancement de ladite activité d'exploitation pour poursuite d'exécution.

Le procédé objet de la présente invention trouve application à l'informatique en réseau, et, en particulier, à la mise en oeuvre de serveurs informatiques supportant des partitions utilisables simultanément et successivement par des exploitations ou activités d'exploitations différentes, ainsi qu'à la mise en oeuvre de serveurs informatiques à très grande flexibilité et disponibilité d'utilisation entre serveurs informatiques, permettant de transférer sans difficulté ou opération complexe une activité d'exploitation d'un serveur informatique vers un autre serveur informatique.

Il sera mieux compris à la lecture de la description et à l'observation des dessins ci-après, dans lesquels, outre la figure 1a et la figure 1b illustratives d'une machine partitionnable sur une plate-forme informatique de l'art antérieur,

- la figure 2a représente, à titre illustratif, un organigramme général de mise en oeuvre du procédé objet de la présente invention,
- la figure 2b représente, à titre illustratif, un détail de mise en oeuvre spécifique non limitatif d'une des étapes de mise en oeuvre du procédé objet de l'invention représenté en figure 2a,
- la figure 2c représente, à titre illustratif, un processus spécifique de mise en oeuvre du procédé objet de l'invention, lors d'une modification volontaire des paramètres de date et/ou d'heure par l'utilisateur,
- les figures 3a à 3e représentent, à titre illustratif, des modes de mise en oeuvre spécifiques des étapes du procédé objet de l'invention, tel que représenté en figure 2a, lors de l'introduction de modifications d'un périmètre informatique courant en périmètre informatique suivant distinct par un usager, au cours d'une opération d'exécution d'une activité d'exploitation par ce dernier,
- la figure 4 représente un système de sauvegarde de l'horloge locale d'un périmètre informatique, conforme à l'objet de la présente invention.

Une description plus détaillée du procédé de sauvegarde de l'horloge locale d'un périmètre informatique configuré sur une plate-forme multicellulaire de ressources informatiques, conforme à l'objet de la présente invention, sera maintenant donnée en liaison avec les figures 1a, 1b et avec les figures suivantes.

Préalablement à la description proprement dite du procédé objet de la présente invention, des rappels seront indiqués relativement à la configuration et au mode opératoire de périmètres informatiques configurés sur une plate-forme multicellulaire de ressources informatiques.

En référence à la figure 1a, on rappelle que les plate-formes multicellulaires actuelles peuvent être constituées par des plate-formes matérielles conformes à l'architecture Intel IA-64 par exemple.

De manière générale, en référence à la figure précitée, on rappelle que ces plate-formes multicellulaires sont constituées par des cellules notées $C_{kj}$, k et j variant de 1 à N par exemple.

De telles plate-formes permettent en fait de configurer des périmètres informatiques $P_i$ distincts, à chaque périmètre $P_j$ pouvant être associé un système d'exploitation $OS_i$ par exemple. Chaque système d'exploitation $OS_i$ perçoit alors son périmètre $P_i$ comme une plate-forme indépendante de la taille du périmètre $P_i$.

Les systèmes d'exploitation $OS_i$ peuvent être différents, leur choix étant effectué à partir d'impératifs techniques, en fonction de l'activité d'exploitation considérée, ou de critères formulés par l'utilisateur.

Chaque cellule $C_{kj}$ dispose de ressources informatiques élémentaires telles que notamment des ressources notées $R_k j$ pouvant correspondre à des éléments en mémoire, des éléments d'entrée/sortie ou analogues, ainsi que, bien entendu, à un circuit d'horloge noté $CK_{kj}$.

De manière générale, un utilisateur est en mesure de configurer un périmètre $P_i$ pour l'exécution d'une application ou activité d'exploitation notée $A_i$, ce périmètre $P_i$ consistant en une pluralité de cellules telles que délimitées par exemple sur la figure 1a.

On conçoit, en particulier, que l'utilisateur est en mesure de configurer un ou plusieurs périmètres simultanément sur la plate-forme considérée PF telle que représentée sur la figure 1a, le périmètre $P_{i+1}$ permettant l'exécution par exemple d'une activité d'exploitation $A_{i+1}$ par exemple distincte de l'activité d'exploitation $A_i$. Ces opérations de configuration et de partition de la plate-forme multicellulaire peuvent être exécutées au moyen d'un outil d'administration noté MT, lui-même muni de ressources informatiques, et connecté en réseau à la plate-forme PF.

D'une manière générale, à chaque périmètre $P_i$, on associe une horloge locale constituée par l'une des horloges

3

$CK_{kj}$ des cellules constitutives du périmètre $P_i$.

Lorsque, bien entendu, les périmètres informatiques $P_i$ et $P_{i+1}$ sont amenés à fonctionner simultanément, les périmètres précités sont disjoints. Ainsi, en référence à la figure 1a, on comprend que l'horloge locale du périmètre $P_i$ est constituée par l'horloge et les circuits d'horloge équipant la cellule $C_{kj}$ par exemple.

Enfin, on indique que l'outil d'administration MT est constitué par un ensemble logiciel exécuté par un système ordinateur comportant, par exemple, une unité centrale $UC_o$, une mémoire de travail RAM et une horloge $CK_o$, l'ensemble étant désigné par Plateform Administration and Maintainability Sofware ou PAM, ainsi que mentionné sur la figure 1a.

On comprend ainsi qu'à chaque périmètre $P_i$ peut être associé un système d'exploitation $OS_i$ pour l'exécution d'une application $A_i$.

D'une manière générale, les systèmes d'exploitation $OS_i$ précités permettent d'accéder aux ressources de la plate-forme et en particulier du périmètre $P_i$ au travers d'interfaces standard, ces interfaces utilisant en général soit un accès direct, soit par l'intermédiaire du logiciel BIOS, pour Basic Input Output Software, aux ressources matérielles locales $R_{kj}$ précédemment citées.

Pour cette raison, sur la figure 1b, on a représenté un périmètre $P_i$ permettant l'exécution d'une activité d'exploitation $A_i$ par l'intermédiaire d'un système d'exploitation $OS_i$, périmètre pour lequel l'ensemble des ressources du périmètre est noté $\Sigma_{kj}R_{kj}$ où cette notation désigne l'ensemble des ressources accessibles par l'intermédiaire du système d'exploitation $OS_i$ pour le périmètre considéré $P_i$, à ce périmètre étant en outre associée une horloge dite locale $Ck_i$ correspondant par exemple à l'une des horloges des cellules constitutives du périmètre $P_i$.

Pour la mise en oeuvre du procédé objet de la présente invention, et afin de faciliter la mise en oeuvre de ce dernier, les interfaces d'accès aux ressources locales sont servies soit directement, soit par l'intermédiaire du BIOS, grâce à la mise en oeuvre de l'outil d'administration MT.

L'architecture correspondante permet, ainsi que représenté en figure 1b, d'intercepter les accès des systèmes d'exploitation aux ressources de la plate-forme PF, les différents périmètres $P_i$, $P_{i+1}$, à $P_{i+n}$ pouvant être mis en oeuvre sur des parties distinctes de la plate-forme à partir de systèmes d'exploitation semblables ou différents et notés, pour cette raison, $OS_i$, $OS_{i+1}$ à $OS_{i+n}$.

On comprend en outre que, conformément à un aspect particulièrement remarquable du procédé objet de la présente invention, l'utilisateur peut également configurer chaque périmètre $P_i$ de manière à ce que les périmètres successifs soient en recouvrement par exemple, chaque périmètre $P_i$ à $P_{i+n}$ pouvant comporter par exemple des ressources, c'est-à-dire des cellules $C_{kj}$ communes, chaque périmètre étant alors utilisé successivement pour l'exécution successive d'une même application $A_i$ par exemple.

On comprend, bien entendu que, dans une telle situation notamment, l'outil d'administration MT comporte lui-même des ressources informatiques et, bien entendu, une horloge notée $CK_0$ sur la figure 1b.

Le procédé objet de la présente invention a pour objet de permettre le passage direct d'un périmètre $P_i$ à un périmètre distinct $P_{i+1}$ et successivement à des périmètres distincts successifs pour l'exécution d'une même application $A_i$ par passes successives à partir de périmètres distincts.

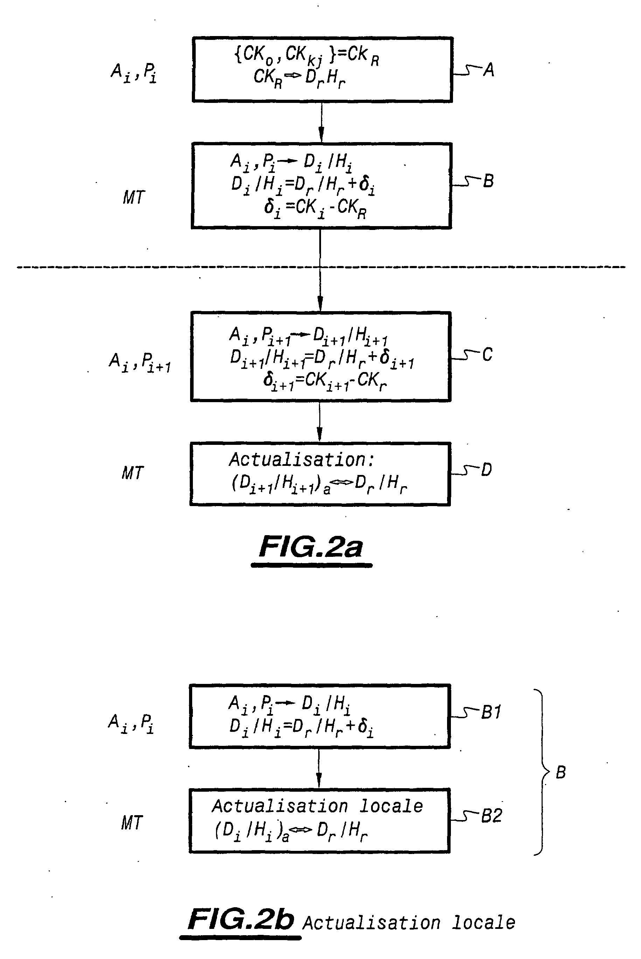

Le procédé objet de la présente invention sera maintenant décrit en liaison avec la figure 2a dans le contexte précédemment cité.

En référence à la figure précitée, on indique que le procédé objet de la présente invention permet l'exécution d'une activité d'exploitation $A_i$ sur au moins un périmètre informatique courant désigné par $P_i$ ou sur des périmètres informatiques distincts successifs notés $P_{i+1}$ à $P_{i+n}$ sur la figure 1b.

En outre, en référence à la figure 2a, le procédé objet de l'invention consiste, en une étape A, à établir pour l'ensemble constitué par l'outil d'administration MT et par tous les périmètres informatiques configurables sur la plate-forme multicellulaire, une horloge de référence absolue.

A l'étape A de la figure 2a, cette opération est représentée par la relation :

$$\{CK_0, CK_{kj}\} = CK_R.$$

Par cette relation, on indique que le procédé objet de la présente invention, à l'étape A, consiste à choisir, parmi l'ensemble des horloges locales qui sont présentes sur la plate-forme PF et, en particulier, au niveau de chaque cellule $C_{kj}$, ainsi que parmi l'horloge $CK_0$ de l'outil d'administration, une horloge dite de référence permettant de délivrer des signaux d'horloge de référence absolue.

D'une manière générale, on indique que l'horloge de référence absolue $CK_R$ permet de délivrer des informations temporelles sous forme de date de référence $D_r$ et heure de référence $H_r$, ces informations temporelles de référence étant désignées par $D_r/H_r$.

Pour chaque périmètre informatique courant, configuré à la requête d'un utilisateur, auquel est associée une horloge locale courante permettant de gérer une activité d'exploitation à partir du système d'exploitation associé à ce périmètre courant, le procédé objet de l'invention consiste ensuite, à l'étape B, à calculer et mémoriser, pour chaque activité d'exploitation en cours d'exécution sur ce périmètre informatique courant de la plate-forme multicellulaire PF, un attribut de sauvegarde contenant, outre les paramètres de gestion de l'heure de l'activité d'exploitation, et en référence à l'horloge locale courante délivrant des signaux $D_i/H_i$ correspondant à des signaux de date et d'heure en référence à l'horloge locale courante, un paramètre de décalage temporel noté $\delta_i$, ce paramètre représentant le décalage des paramètres de gestion de l'heure de l'horloge locale vis-à-vis de l'horloge de référence absolue.

A l'étape B de la figure 2b, on note ainsi la relation :

$$D_i/H_i = D_r/H_r + \delta_i$$

avec :

$$\delta_i = CK_i - CK_R.$$

On comprend, en particulier, que le paramètre de décalage temporel $\delta_i$ est un paramètre algébrique en avance ou en retard par rapport à l'horloge de référence absolue.

A titre d'exemple non limitatif, on rappelle que les valeurs de date locale $D_i$ et date de référence absolue $D_r$ peuvent avantageusement être exprimées sous forme de : années YY, mois MM, et jours DD.

De même, les paramètres d'heure locale $H_i$ et d'heure de référence absolue $H_r$ peuvent avantageusement être exprimés sous forme de : heures, minutes, secondes et centièmes de seconde, si nécessaire.

Lorsque, après arrêt de l'exécution de l'activité d'exploitation $A_i$ par l'utilisateur, celui-ci procède à un rechargement de la même activité d'exploitation $A_i$ sur un périmètre distinct suivant $P_{i+1}$ en vue de la poursuite de l'exécution de cette même activité d'exploitation $A_i$, ces opérations exécutées par l'utilisateur étant représentées par la ligne pointillée sur la figure 2a, une horloge locale distincte est, bien entendu, associée nécessairement au périmètre suivant distinct $P_{i+1}$, lequel, de surcroît, peut être géré par un système d'exploitation $OS_{i+1}$ distinct du système d'exploitation précédent $OS_i$.

Dans ces conditions, le procédé objet de la présente invention consiste, en une étape C, à recalculer les paramètres de gestion de l'heure de l'activité d'exploitation à partir du paramètre de décalage temporel des paramètres de gestion de l'heure vis-à-vis de l'horloge de référence absolue.

A l'étape C, on note par $D_{i+1}/H_{i+1}$ les paramètres de date du périmètre informatique $P_{i+1}$, l'horloge locale $CK_{i+1}$ étant l'horloge locale associée au périmètre informatique suivant $P_{i+1}$.

A l'étape C, on calcule alors les paramètres de gestion de date et d'heure pour le périmètre $P_{i+1}$ selon la relation :

$$D_{i+1}/H_{i+1} = D_r/H_r + \delta_{i+1}.$$

De même que dans le cas de l'opération réalisée à l'étape B, le décalage temporel vérifie la relation :

$$\delta_{i+1} = CK_{i+1} - CK_r.$$

L'étape C est alors suivie d'une étape D consistant à actualiser l'horloge locale suivante $CK_{i+1}$ associée au périmètre informatique suivant distinct $P_{i+1}$ préalablement au lancement de l'activité d'exploitation $A_i$ pour poursuite de l'exécution de celle-ci.

A l'étape D, l'opération d'actualisation est représentée par la relation :

$$(D_{i+1}/H_{i+1})a \Leftrightarrow D_r/H_r.$$

Par l'opération d'actualisation précitée, représentée par la double flèche, on comprend que cette opération revient à compenser tout écart de chaque activité d'exploitation $A_i$ et exécuté sur le périmètre informatique courant puis sur le périmètre informatique suivant distinct $P_{i+1}$.

Afin de simplifier la mise en oeuvre du procédé objet de la présente nvention, celui-ci peut consister, à l'étape B, en une exécution d'un recalage de 'horloge locale courante associée au périmètre courant $P_i$ de façon à compenser le décalage temporel $\delta_i$ lors de l'exécution de l'activité d'exploitation $A_i$ sur le périmètre informatique courant $P_i$.

Sur la figure 2b, cette opération est réalisée par l'intermédiaire d'une sous-étape B1 consistant, bien entendu, à calculer le décalage temporel $\delta_i$ par rapport à l'horloge locale de référence, cette opération à la sous-étape B1 étant notée :

$$D_i/H_i = D_r/H_r + \delta_i.$$

La sous-étape B1 est alors suivie d'une sous-étape B2 consistant à effectuer une actualisation locale au niveau du périmètre $P_i$ de la forme vérifiant a relation :

$$D_i/H_i \Leftrightarrow D_r/H_r.$$

cette opération revenant à caler l'horloge locale sur l'horloge de référence absolue.

Dans ces conditions, l'opération C peut alors être exécutée normalement pour le périmètre informatique suivant distinct $P_{i+1}$ et l'opération D consiste alors à effectuer une actualisation sur la base du seul décalage de l'horloge locale suivante distincte, la valeur $\delta_i$ ayant été ramenée à zéro pour l'horloge locale précédente du périmètre informatique courant $P_i$.

En ce qui concerne le choix de l'horloge locale de chaque périmètre informatique courant $P_i$, puis de chaque périmètre informatique suivant distinct $P_{i+1}$ à $P_{i+n}$, on indique que plusieurs possibilités peuvent être envisagées.

Selon une première possibilité, l'horloge de référence absolue peut être constituée par un composant matériel local d'adresse spécifique appartenant à la plate-forme multicellulaire. Dans cette situation, le procédé objet de la présente invention peut consister à réserver l'une des cellules de la plate-forme multicellulaire PF d'adresse déterminée de façon à réserver le composant matériel local de la cellule précitée et d'attribuer à celui-ci la fonction d'horloge de référence absolue. Un tel choix est possible, mais il présente toutefois l'inconvénient de particulariser l'une des cellules $C_{kj}$ de la plate-forme PF et, finalement, d'imposer une ou plusieurs entrées/sorties et échanges de messages entre l'outil d'administration MT et la plate-forme PF pour obtenir les informations d'horloge absolue $D_r/H_r$.

Selon un choix préférentiel de mise en oeuvre du procédé objet de la présente invention, l'horloge de référence absolue peut avantageusement être constituée par un composant matériel local appartenant à l'outil d'administration.

Dans ces conditions, on comprend, bien entendu, que le composant local n'est autre que l'horloge $CK_0$ équipant les ressources matérielles de l'outil d'administration MT.

Cette deuxième solution apparaît préférable vis-à-vis de la solution précédente dans la mesure où l'horloge de référence absolue étant partie intégrante de l'outil d'administration MT, il n'est plus nécessaire de réserver les ressources d'une cellule spécifique de la plate-forme PF d'une part, alors que, d'autre part, l'horloge de référence absolue et les signaux correspondants sont directement disponibles au niveau de l'outil d'administration MT.

Enfin, le procédé objet de la présente invention permet, bien entendu, de prendre en compte toute modification locale de date et/ou d'heure qui serait introduite volontairement par l'utilisateur lors de l'exécution d'une activité d'exploitation $A_i$ sur un périmètre informatique $P_i$ correspondant.

De telles opérations de changement de date et/ou d'heure sont fréquentes et permettent à tout utilisateur d'utiliser une heure locale arbitraire ou, à tout le moins, susceptible de correspondre à des impératifs d'exploitation spécifiques.

Pour la mise en oeuvre du procédé objet de la présente invention lors d'une modification locale volontaire de date ou d'heure par l'usager, on considère que l'actualisation de l'horloge locale suivante distincte, associée au périmètre informatique suivant distinct $P_{i+1}$, a été effectuée si nécessaire, conformément à l'étape D de la figure 2a et à l'étape B de cette même figure ou, le cas échéant et de préférence, conformément à la mise en oeuvre de l'étape B selon la figure 2b.

Dans ces conditions, on indique que le changement volontaire de date et/ou d'heure est ainsi pris en compte pour tout périmètre informatique courant $P_i$ que celui soit configuré par l'utilisateur lors d'une première mise en oeuvre de l'application $A_i$ ou, le cas échéant, lors de mises en oeuvre successives.

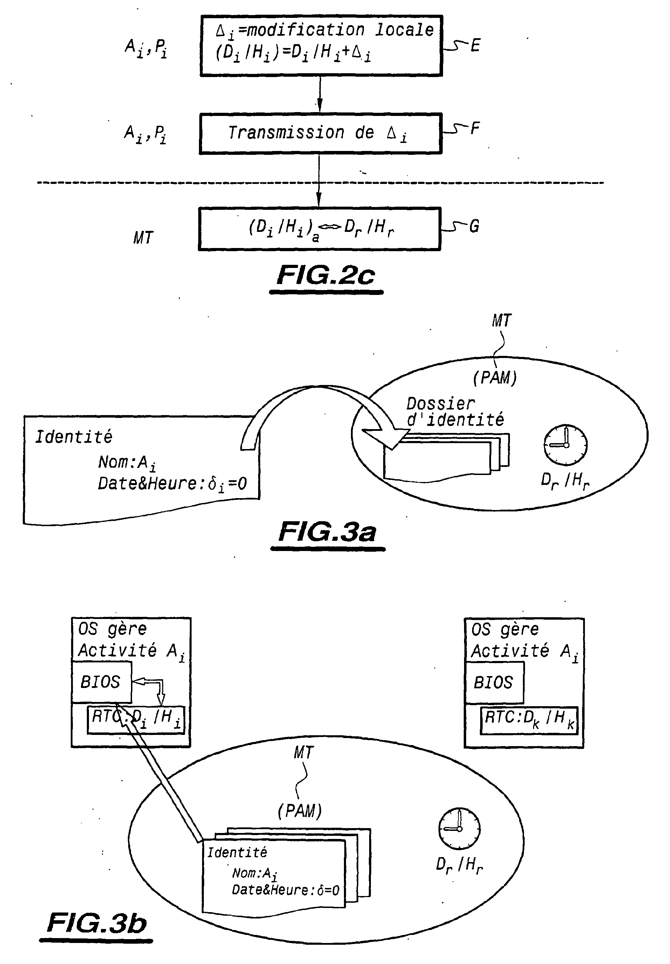

Dans ces conditions, le procédé objet de la présente invention consiste, ainsi que représenté à la figure 2c, à modifier l'horloge locale courante d'une valeur correspondant à la modification introduite, cette modification étant notée $\Delta_i$.

L'opération de modification de l'horloge locale courant vérifie la relation :

$$- (D_i/H_i) = D_i/H_i + \Delta_i.$$

L'étape E est alors suivie d'une étape F consistant à transmettre la valeur de la modification locale de date et d'heure $\Delta_i$ à l'outil d'administration MT. La modification est demandée au BIOS par le système d'exploitation $OS_i$ gérant l'exécution de l'activité d'exploitation $A_i$. Le BIOS en notifie la requête à l'outil d'administration MT.

Sur réception de la valeur de modification locale de date et d'heure précitée, le procédé objet de l'invention consiste, à l'étape G, à mettre à jour le paramètre de décalage temporel des paramètres de gestion de l'heure vis-à-vis de l'horloge de référence absolue et l'attribut de sauvegarde précité. Cette opération vérifie la relation :

$$(D_i/H_i)_a \Leftrightarrow D_r/H_r.$$

Cette opération désigne en fait la compensation des paramètres de date et d'heure et le calage des valeurs correspondantes sur les valeurs de date et d'heure de l'horloge de référence, ainsi que mentionné précédemment dans la description.

Des moyens de mise en oeuvre spécifique du procédé objet de la présente invention seront maintenant décrits en liaison avec les figures 3a à 3c, puis 3d et 3e pour les opérations effectuées lors de changements du périmètre informatique courant P; en un périmètre informatique suivant distinct $P_{i+1}$ respectivement un changement volontaire de date et d'heure réalisé par l'utilisateur, lors de l'exécution d'une activité d'exploitation A; sur un périmètre informatique courant $P_i$.

La figure 3a représente les opérations effectuées lors de la création de l'activité d'exploitation $A_i$.

L'outil d'administration MT et, en particulier, le logiciel PAM correspondant, effectuent la création d'un objet ou fichier informatique de type Identité dédié à l'activité d'exploitation $A_i$ précitée. Ce fichier peut comporter avantageusement, ainsi que représenté sur la figure 3a, le nom de l'activité d'exploitation $A_i$ ainsi qu'un paramètre de décalage temporel par défaut $\delta_i$ établi à la valeur nulle par rapport à l'horloge de référence $D_r/H_r$. L'outil d'administration MT peut alors rassembler une pluralité de dossiers d'identité ou fichiers d'identité correspondant à différentes activités.

La figure 3b représente le processus de chargement de l'activité d'exploitation $A_i$ sur le périmètre P; défini par l'utilisateur.

Au moment de l'initialisation du périmètre $P_i$ précité, l'outil d'administration MT calcule alors la valeur effective du décalage temporel $\delta_i$ selon la relation représentée à l'étape B de la figure 2a ou, le cas échéant, selon l'étape B1 de la figure 2b.

L'outil d'administration MT transmet les informations nécessaires à la mise à jour de l'horloge locale du composant d'horloge RTC du périmètre $P_i$ par l'intermédiaire du BIOS. Cette opération est alors réalisée selon l'étape B2 de la figure 2b.

Le logiciel BIOS réalise alors la mise à jour selon la relation de l'étape B2 de la figure 2b avant de passer la main au système d'exploitation $OS_i$ sous lequel s'exécute l'activité d'exploitation $A_i$.

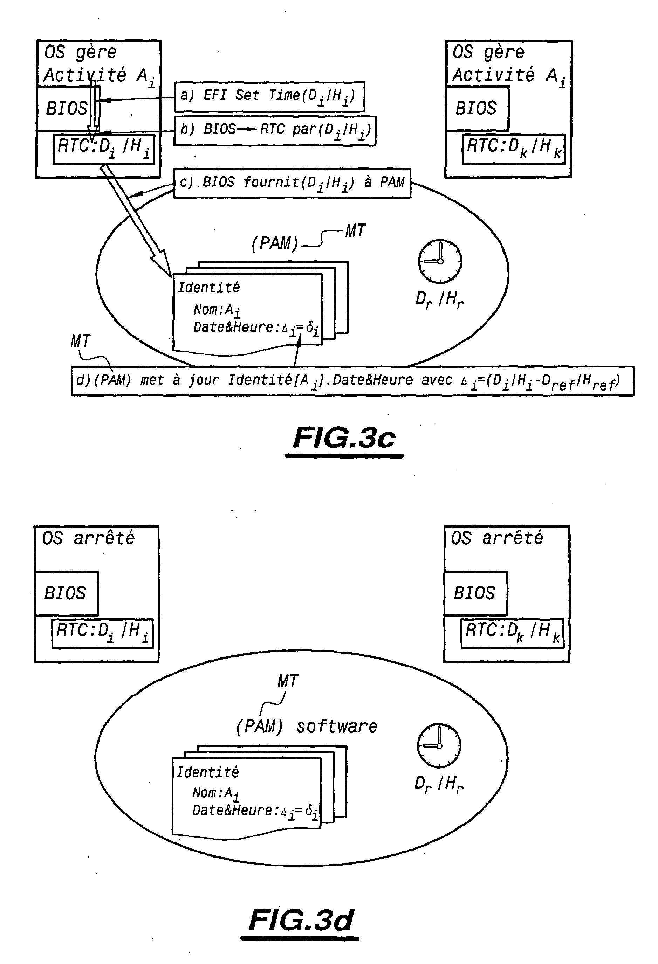

La figure 3c représente les opérations effectuées lors de l'introduction d'une modification de date et/ou d'heure par l'utilisateur de l'activité d'exploitation $A_i$ telles que représentées en figure 2c.

En premier lieu, l'utilisateur de l'activité d'exploitation A; demande la modification des paramètres de gestion de l'heure courante $D_i/H_i$.

La méthode SetTime de l'interface EFI du BIOS est alors appelée avec les paramètres de la demande de modification de date et/ou d'heure.

Le BIOS du périmètre $P_i$ met à jour le composant d'horloge locale $CK_i$ du périmètre informatique $P_i$ et transmet à l'outil d'administration MT les paramètres de la demande de modification.

L'outil d'administration MT et, en particulier, le module logiciel PAM de celui-ci, recalculent alors la différence correspondant à la modification $\Delta_i$ et vérifiant la relation :

$$\Delta_i = D_i/H_i - D_r/H_r$$

entre le paramètre de date et d'heure nouveau issu de la modification et l'heure de référence et met à jour l'attribut de date et heure de l'objet identité dont le nom correspond à l'activité $A_i$.

La figure 3d représente les opérations exécutées lors de l'arrêt de l'exécution d'une activité d'exploitation sur un périmètre informatique courant $P_i$ exécutant précédemment une activité d'exploitation $A_i$.

En référence à la figure 3d précitée, lorsqu'une telle activité est arrêtée et qu'en fait elle libère le périmètre

informatique $P_i$ utilisé, l'objet identité est sauvegardé par l'outil d'administration MT.

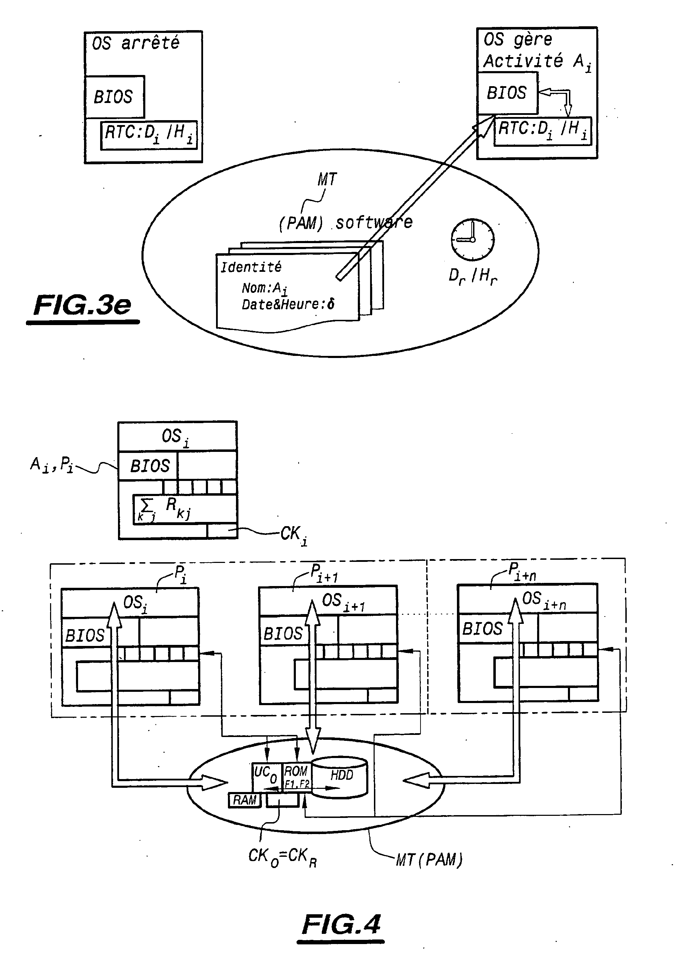

La figure 3e représente le chargement de l'activité d'exploitation $A_i$ précédente sur un nouveau périmètre informatique $P_{i+1}$.

Les traitements réalisés dans cette situation sont alors identiques aux opérations réalisées et décrites lors du chargement de l'activité $A_i$ sur le périmètre informatique $P_i$ représenté en figure 3b. Toutefois, dans le cadre de la figure 3e, les opérations sont cette fois réalisées par l'intermédiaire du BIOS du périmètre informatique $P_{i+1}$. Au final, l'activité $A_i$ a changé de périmètre tout en conservant toutefois la modification d'heure et de date effectuée sur le périmètre précédent, tel que décrit précédemment en liaison avec la figure 3b ou la figure 3c lorsqu'il s'agit d'une modification volontaire.

Enfin, en référence à la figure 4, on indique qu'un système de sauvegarde de l'horloge locale d'un périmètre informatique, conforme à l'objet de la présente invention, comprend, en particulier, un circuit d'horloge de référence absolue notée $CK_R$, ce circuit pouvant être choisi parmi l'un des circuits d'horloge équipant la plate-forme informatique PF ou, de préférence, ainsi que représenté sur la figure 4, l'ordinateur constitutif de l'outil d'administration MT.

En outre, le système objet de l'invention est remarquable en ce que l'outil d'administration MT comporte, implanté en mémoire permanente de l'ordinateur, c'est-à-dire soit en mémoire ROM, soit sur le disque dur de ce dernier, un module de calcul d'un attribut de sauvegarde contenant, outre les paramètres de gestion de l'heure de l'activité d'exploitation A; en référence à l'horloge locale $CK_i$, un paramètre de décalage temporel des paramètres de gestion de l'heure vis-à-vis de l'horloge de référence absolue $CK_R$.

On comprend, en particulier, que le module de calcul précité peut être constitué par un programme mémorisé sous forme de fichier dans le disque dur ou, le cas échéant, en mémoire morte ROM et chargé à l'initialisation de l'outil d'administration MT. Ce module est donc constitué par un module logiciel noté $F_1$ sur la figure 4.

En outre, un module de mise à jour de l'horloge locale $CK_i$ de toute partition $P_i$ est également prévu, conformément aux relations précédemment données dans la description pour la mise en oeuvre du procédé objet de la présente invention. Ce module est représenté par un fichier $F_2$ sur la figure 4, lequel est également chargé en mémoire centrale de l'ordinateur dès l'initialisation.

De préférence, l'attribut de sauvegarde est constitué sous forme d'un fichier Identité comportant au moins le nom de l'activité d'exploitation $A_i$ et la valeur temporelle associée à cette activité d'exploitation, pour le périmètre informatique $P_i$ considéré.

## Revendications

**1.** Procédé de sauvegarde de l'horloge locale d'un périmètre informatique configuré sur une plate-forme multicellulaire de ressources informatiques dans le cadre d'une activité d'exploitation, chaque périmètre informatique étant géré par un système d'exploitation spécifique et pouvant être configuré par un utilisateur à partir d'un outil d'administration (MT, PAM) en vue de l'exécution de ladite activité d'exploitation sur au moins un périmètre informatique courant ou sur des périmètres informatiques distincts successifs, **caractérisé en ce qu'**il consiste :

a) à établir, pour l'ensemble constitué par ledit outil d'administration et par tous les périmètres informatiques configurables sur ladite plate-forme multicellulaire, une horloge de référence absolue ($CK_R$) ; et, pour chaque périmètre informatique courant ($P_i$) configuré à la requête d'un utilisateur auquel est associée une horloge locale courante ($CK_i$) permettant de gérer une activité d'exploitation ($A_i$) à partir dudit système d'exploitation,
b) à calculer et mémoriser, pour chaque activité d'exploitation ($A_i$) en cours d'exécution sur ce périmètre informatique ($P_i$) courant de ladite plate-forme multicellulaire, un attribut de sauvegarde contenant, outre les paramètres de gestion de l'heure de ladite activité d'exploitation, en référence à ladite horloge locale courante ($CK_i$), un paramètre de décalage temporel desdits paramètres de gestion de l'heure vis-à-vis de ladite horloge de référence absolue ($CK_R$); et, lors du rechargement de ladite activité d'exploitation pour poursuite d'exécution sur un périmètre informatique suivant ($P_{i+1}$) distinct du périmètre informatique courant ($P_i$) et auquel est associée une horloge locale suivante ($CK_{i+1}$) distincte de l'horloge locale courante ($CK_i$) associée au périmètre informatique courant,
c) à recalculer les paramètres de gestion de l'heure de ladite activité d'exploitation à partir dudit paramètre de décalage temporel des paramètres de gestion de l'heure vis-à-vis de ladite horloge de référence absolue ($CK_R$); et
d) à actualiser ladite horloge locale suivante distincte associée audit périmètre informatique suivant distinct ($P_{i+1}$), préalablement au lancement de ladite activité d'exploitation ($A_i$) pour poursuite d'exécution.

**2.** Procédé selon la revendication 1, **caractérisé en ce que** ladite horloge de référence absolue ($CK_R$) est constituée par un composant matériel local d'adresse spécifique appartenant à ladite plate-forme multicellulaire.

**3.** Procédé selon la revendication 1, **caractérisé en ce que** ladite horloge de référence absolue ($CK_R$) est constituée par un composant matériel local appartenant audit outil d'administration.

**4.** Procédé selon l'une des revendications 1 à 3, **caractérisé en ce que**, lors d'une modification des paramètres de gestion de l'heure de ladite activité d'exploitation ($A_i$) par un utilisateur au cours d'une exécution, au moins partielle, de ladite activité d'exploitation sur ledit périmètre informatique courant, celui-ci consiste en outre :

e) à actualiser l'horloge locale courante d'une valeur correspondant à ladite modification ($\Delta_i$) ;
f) à transmettre conjointement ladite modification ($\Delta_i$) audit outil d'administration (MT); et, suite à cette transmission,
g) à mettre à jour ledit paramètre de décalage temporel desdits paramètres de gestion de l'heure vis-à-vis de ladite horloge de référence absolue et ledit attribut de sauvegarde.

**5.** Procédé selon l'une des revendications précédentes, **caractérisé en ce que** chaque attribut de sauvegarde comporte au moins :

un identificateur de ladite activité d'exploitation ;
un paramètre de décalage en date, heures, minutes, secondes, centièmes de seconde.

**6.** Procédé selon l'une des revendications 1 à 5, **caractérisé en ce que** les opérations de mise à jour ou d'actualisation sont effectuées par l'intermédiaire du BIOS associé au système d'exploitation de chaque périmètre informatique.

**7.** Système de sauvegarde de l'horloge locale d'un périmètre informatique, ledit périmètre informatique étant configuré pour l'exécution d'une activité d'exploitation en une partition d'une plate-forme multicellulaire à partir d'un outil d'administration interconnecté en réseau à ladite plate-forme informatique, chaque périmètre informatique ($P_i$) comportant un circuit d'horloge local constitué par le circuit d'horloge d'une cellule informatique constitutive dudit périmètre informatique et ledit outil d'administration étant constitué par un ordinateur muni d'un circuit d'horloge spécifique, **caractérisé en ce qu'**il comprend :

- un circuit d'horloge de référence absolue ($CK_R$), choisi parmi l'un des circuits d'horloge équipant ladite plate-forme informatique respectivement ledit ordinateur ; et **en ce que** ledit outil d'administration (MT, PAM) comporte, implanté en mémoire permanente dudit ordinateur,
- un module de calcul d'un attribut de sauvegarde contenant, outre les paramètres de gestion de l'heure de ladite activité d'exploitation ($A_i$) en référence à ladite horloge locale ($CK_i$), un paramètre de décalage temporel de ces paramètres de gestion de l'heure vis-à-vis de ladite horloge de référence absolue ($CK_R$);
- un module de mise à jour de l'horloge locale de toute partition constitutive d'un périmètre informatique configurable sur ladite plate-forme informatique.

**8.** Système selon la revendication 7, **caractérisé en ce que** ledit circuit d'horloge de référence absolue ($CK_R$) est le circuit d'horloge spécifique dudit ordinateur.

**9.** Système selon l'une des revendications 7 ou 8, **caractérisé en ce que** ledit attribut de sauvegarde est constitué sous forme d'un fichier identité comportant au moins le nom de ladite activité d'exploitation ($A_i$) et la valeur du décalage temporel associé à cette activité d'exploitation pour le périmètre informatique ($P_i$) considéré.

**Claims**

**1.** A method for saving the local clock of a data processing area configured on a multicellular platform of data processing resources within the framework of an operating activity, each data processing area being managed by a specific operating system and being able to be configured by a user from a management tool (PAM) with a view to the execution of said operating activity on at least one current data processing area or on different successive data processing areas, **characterised in that** it consists in :

a) establishing an absolute reference clock ($CK_R$) for the whole constituted by said management tool and by all the configurable data processing areas on said multicellular platform; and, for each current data processing area ($P_i$) configured at the request of a user to which is associated a current local clock ($CK_i$) making it possible to manage an operating activity ($A_i$) from said operating system,

b) calculating and storing, for each operating activity ($A_i$) being executed on the current data processing area ($P_i$) of said multicellular platform, a backup attribute containing, in addition to the parameters for management of the time of said operating activity, with reference to said current local clock ($CK_i$), a time shift parameter of said parameters for management of the time with respect to said absolute reference clock ($CK_R$); and, during a reloading of said operating activity to continue execution on a successive data processing area ($P_{i+1}$) different from the current data processing area ($P_i$) and with which is associated a successive local clock ($CK_{i+1}$) different from the current local clock ($CK_i$) associated with the current data processing area,

c) recalculating the parameters for management of the time of said operating activity starting from said time shift parameter of the parameters for management of the time with respect to said absolute reference clock ($CK_R$); and

d) updating said successive different local clock associated with said successive different data processing area ($P_{i+1}$), prior to the launching of said operating activity ($A_i$) to continue execution.

2. The method of claim 1, **characterised in that** said absolute reference clock ($CK_R$) is constituted by a local physical component having a specific address belonging to said multicellular platform.

3. The method of claim 1, **characterised in that** said absolute reference clock ($CK_R$) is constituted by a local physical component belonging to said management tool.

4. The method of one of claims 1 to 3 **characterised in that**, during modification of the parameters for management of the time of said operating activity ($A_i$) by a user in the course of an at least partial execution of said operating activity on said current data processing area, said method further includes :

   e) updating the current local clock by a value corresponding to said modification ($A_i$);

   f) transmitting conjointly said modification ($\Delta_i$) to said management tool (MT); and, following this transmission,

   g) bringing up to date said time shift parameter of said parameters for management of the time with respect to said absolute reference clock and said backup attribute.

5. The method of one of the preceding claims, **characterised in that** each backup attribute includes at least:

   . an identifier of said operating activity;

   . a shift parameter of date, hours, minutes, seconds, hundredths of a second.

6. The method of one of claims 1 to 5 **characterised in that** the operations of bringing up to date or updating are carried out by way of the BIOS associated with the operating system of each data processing area.

7. A system for saving the local clock of a data processing area, said data processing area being configured for the execution of an operating activity in a partition of a multicellular platform from a management tool interconnected through a network to said data processing platform, each data processing area ($P_i$) including a local clock circuit constituted by the clock circuit of a constituent data processing cell of said data processing area and said management tool being constituted by a computer equipped with a specific clock circuit, **characterised in that** it comprises:-

   - an absolute reference clock circuit ($CK_R$), selected from one of the clock circuits equipping said multicellular platform respectively said computer; and **in that** said management tool (MT,PAM) includes, implanted in permanent memory of said computer,

   - a module for computation of a backup attribute containing, in addition to the parameters for management of the time of said operating activity with reference to said local clock ($CK_i$), a time shift parameter of the parameters for management of the time with respect to said absolute reference clock ($CK_R$);

   - a module for bringing up to date the local clock of any constituent partition of a configurable data processing area on said data processing platform.

8. The system of claim 7, **characterised in that** said absolute reference clock circuit ($CK_R$) is the specific clock circuit of said computer.

9. The system of one of claims 7 or 8, **characterised in that** said backup attribute is constituted in the form of an identity file including at least the name of said operating activity ($A_i$) and the value of the time shift associated with said operating activity for the data processing area ($P_i$) being considered.

**Patentansprüche**

1. Verfahren zum Sichern des lokalen Takts einer Datenverarbeitungszone, die auf einer Mehrfachzellenplattform von Datenverarbeitungsbetriebsmitteln konfiguriert ist, im Rahmen einer Betriebsaktivität, wobei jede Datenverarbeitungszone durch ein spezifisches Betriebssystem gesteuert wird und durch einen Anwender anhand eines Managementwerkzeugs (MT, PAM) für die Ausführung der Betriebsaktivität in wenigstens einer momentanen Datenverarbeitungszone oder in aufeinander folgenden verschiedenen Datenverarbeitungszonen konfiguriert werden kann, **dadurch gekennzeichnet, dass** es darin besteht:

   a) für die durch das Managementwerkzeug und alle konfigurierbaren Datenverarbeitungszonen auf der Mehrfachzellenplattform gebildete Gesamtheit einen absoluten Referenztakt ($CK_R$) zu schaffen; und für jede momentane Datenverarbeitungszone ($P_i$), die auf Anforderung eines Anwenders konfiguriert ist und der ein momentaner lokaler Takt ($CK_i$) zugeordnet ist, der ermöglicht, eine Betriebsaktivität ($A_i$) anhand des Betriebssystems zu steuern,

   b) für jede Betriebsaktivität ($A_i$), die momentan in dieser momentanen Datenverarbeitungszone ($P_i$) dieser Mehrfachzellenplattform ausgeführt wird, ein Sicherungsattribut zu berechnen und zu speichern, das außer den Parametern für die Steuerung der Zeit der Betriebsaktivität mit Bezug auf den momentanen lokalen Takt ($CK_i$) einen Parameter für die zeitliche Verschiebung dieser Parameter, um diese Zeit in Bezug auf den absoluten Referenztakt ($CK_R$) zu steuern, enthält; und beim erneuten Laden der Betriebsaktivität für die Fortsetzung der Ausführung in einer folgenden Datenverarbeitungszone ($P_{i+1}$), die von der momentanen Datenverarbeitungszone ($P_i$) verschieden ist und der ein folgender lokaler Takt ($CK_{i+1}$) zugeordnet ist, der von dem momentanen lokalen Takt ($CK_i$), der der momentanen Datenverarbeitungszone zugeordnet ist, verschieden ist,

   c) die Parameter für die Steuerung der Zeit der Betriebsaktivität anhand des Zeitverschiebungsparameters der Parameter für die Steuerung der Zeit in Bezug auf den absoluten Referenztakt ($CK_R$) erneut zu berechnen; und

   d) den verschiedenen folgenden lokalen Takt, der der anderen folgenden Datenverarbeitungszone ($P_{i+1}$) zugeordnet ist, vor dem Start der Betriebsaktivität ($A_i$) für die Fortsetzung der Ausführung zu aktualisieren.

2. Verfahren nach Anspruch 1, **dadurch gekennzeichnet, dass** der absolute Referenztakt ($CK_R$) durch eine lokale Hardware-Komponente mit bestimmter Adresse gebildet wird, die zu der Mehrfachzellenplattform gehört.

3. Verfahren nach Anspruch 1, **dadurch gekennzeichnet, dass** der absolute Referenztakt ($CK_R$) durch eine lokale Hardware-Komponente gebildet wird, die zu dem Managementwerkzeug gehört.

4. Verfahren nach einem der Ansprüche 1 bis 3, **dadurch gekennzeichnet, dass** bei einer Modifikation der Parameter für die Steuerung der Zeit der Betriebsaktivität ($A_i$) durch einen Anwender im Verlauf wenigstens einer partiellen Ausführung der Betriebsaktivität in der momentanen Datenverarbeitungszone dieses außerdem darin besteht:

   e) den momentanen lokalen Takt mit einem Wert zu aktualisieren, der dieser Modifikation ($\Delta_i$) entspricht;

   f) diese Modifikation ($\Delta_i$) gemeinsam zu dem Managementwerkzeug (MT) zu übertragen; und nach dieser Übertragung

   g) den Zeitverschiebungsparameter der Parameter für die Steuerung der Zeit in Bezug auf den absoluten Referenztakt und das Sicherungsattribut zu aktualisieren.

5. Verfahren nach einem der vorhergehenden Ansprüche, **dadurch gekennzeichnet, dass** jedes Sicherungsattribut wenigstens umfasst:

   - einen Identifizierer der Betriebsaktivität;

   - einen Parameter für die Verschiebung des Datums, der Stunde, der Minuten, der Sekunden und der Hundertstelsekunden.

6. Verfahren nach einem der Ansprüche 1 bis 5, **dadurch gekennzeichnet, dass** die Auffrischungs- oder Aktualisierungsinformationen über das BIOS ausgeführt werden, das dem Betriebssystem jeder Datenverarbeitungszone zugeordnet ist.

7. System zum Sichern des lokalen Takts einer Datenverarbeitungszone, wobei die Datenverarbeitungszone für die Ausführung einer Betriebsaktivität auf einer Partition einer Mehrfachzellenplattform anhand eines Managementwerkzeugs, das über ein Netz mit der Datenverarbeitungsplattform verbunden ist, konfiguriert ist, wobei jede Datenverarbeitungszone ($P_i$) eine Schaltung für den lokalen Takt enthält, die durch die Taktschaltung einer konstitutiven Datenverarbeitungszelle der Datenverarbeitungszone gebildet ist, und das Managementwerkzeug durch einen Rechner gebildet ist, der mit einer spezifischen Taktschaltung versehen ist, **dadurch gekennzeichnet, dass** es umfasst:

- eine Schaltung für einen absoluten Referenztakt ($CK_R$), die aus einer der Taktschaltungen gewählt ist, mit denen die jeweilige Datenverarbeitungsplattform des Rechners ausgerüstet ist; und dass das Managementwerkzeug (MT, PAM) implantiert in den Festwertspeicher des Rechners umfasst:
- ein Modul zum Berechnen eines Sicherungsattributs, das außer den Parametern für die Steuerung der Zeit der Betriebsaktivität ($A_i$) in Bezug auf den lokalen Takt ($CK_i$) einen Parameter für die zeitliche Verschiebung dieser Parameter für die Steuerung der Zeit in Bezug auf den absoluten Referenztakt ($CK_R$) enthält;
- ein Modul zum Auffrischen des lokalen Takts jeder konstitutiven Partition einer Datenverarbeitungszone, die in der Datenverarbeitungsplattform konfigurierbar ist.

8. System nach Anspruch 7, **dadurch gekennzeichnet, dass** die Schaltung für einen absoluten Referenztakt ($CK_R$) die spezifische Taktschaltung des Rechners ist.

9. System nach einem der Ansprüche 7 oder 8, **dadurch gekennzeichnet, dass** das Sicherungsattribut in Form einer Identitätsdatei gebildet ist, die wenigstens den Namen der Betriebsaktivität ($A_i$) und den Wert der zeitlichen Verschiebung, die dieser Betriebsaktivität für die betrachtete Datenverarbeitungszone ($P_i$) zugeordnet ist, enthält.

_FIG.1a_

_FIG.1b_

$A_i, P_i$

$$\{CK_0, CK_{kj}\} = CK_R$$
$$CK_R \Rightarrow D_r H_r$$

$\smallsmile A$

$MT$

$$A_i, P_i \rightarrow D_i / H_i$$
$$D_i / H_i = D_r / H_r + \delta_i$$
$$\delta_i = CK_i - CK_R$$

$\smallsmile B$

$A_i, P_{i+1}$

$$A_i, P_{i+1} \rightarrow D_{i+1} / H_{i+1}$$
$$D_{i+1} / H_{i+1} = D_r / H_r + \delta_{i+1}$$
$$\delta_{i+1} = CK_{i+1} - CK_r$$

$\smallsmile C$

$MT$

$$Actualisation:$$
$$(D_{i+1} / H_{i+1})_a \Leftrightarrow D_r / H_r$$

$\smallsmile D$

## *FIG.2a*

$A_i, P_i$

$$A_i, P_i \rightarrow D_i / H_i$$
$$D_i / H_i = D_r / H_r + \delta_i$$

$\smallsmile B1$

$MT$

$$Actualisation\ locale$$
$$(D_i / H_i)_a \Leftrightarrow D_r / H_r$$

$\smallsmile B2$

$\Big\} B$

## *FIG.2b* Actualisation locale

$A_i, P_i$    $\boxed{\begin{array}{l}\Delta_i=modification\ locale \\ (D_i/H_i)=D_i/H_i+\Delta_i\end{array}}$ ⌇E

$A_i, P_i$    $\boxed{Transmission\ de\ \Delta_i}$ ⌇F

- - - - - - - - - - - - - - - - - - - - - - - - - - - - - - - - - - - - - - - - - - - - - - - -

$MT$    $\boxed{(D_i/H_i)_a \Longleftrightarrow D_r/H_r}$ ⌇G

## *FIG.2c*

$MT$

$(PAM)$

Dossier d'identité

Identité

Nom:$A_i$

Date&Heure:$\delta_i=0$

$D_r/H_r$

## *FIG.3a*

OS gère
Activité $A_i$

BIOS

RTC:$D_i/H_i$

OS gère
Activité $A_i$

BIOS

RTC:$D_k/H_k$

$MT$

$(PAM)$

Identité

Nom:$A_i$

Date&Heure:$\delta=0$

$D_r/H_r$

## *FIG.3b*

OS gère
Activité $A_i$

BIOS

RTC: $D_i$ / $H_i$

a) EFI Set Time($D_i$/$H_i$)

b) BIOS → RTC par($D_i$/$H_i$)

c) BIOS fournit($D_i$/$H_i$) à PAM

OS gère
Activité $A_j$

BIOS

RTC: $D_k$ / $H_k$

(PAM) — MT

$D_r$ / $H_r$

Identité

Nom: $A_i$

Date&Heure: $\Delta_i = \delta_i$

MT

d) (PAM) met à jour Identité[$A_j$].Date&Heure avec $\Delta_i = (D_i/H_i - D_{ref}/H_{ref})$

## FIG.3c

OS arrêté

BIOS

RTC: $D_i$ / $H_i$

OS arrêté

BIOS

RTC: $D_k$ / $H_k$

MT

(PAM) software

$D_r$ / $H_r$

Identité

Nom: $A_i$

Date&Heure: $\Delta_i = \delta_i$

## FIG.3d

OS arrêté

BIOS

$RTC:D_i/H_i$

OS gère
Activité $A_i$

BIOS

$RTC:D_i/H_i$

MT

(PAM) software

Identité
Nom: $A_i$
Date&Heure: $\delta$

$D_r/H_r$

## FIG.3e

$OS_i$

BIOS

$\sum_k \sum_j R_{kj}$

$A_i, P_i$

$CK_i$

$P_i$

$OS_i$

BIOS

$P_{i+1}$

$OS_{i+1}$

BIOS

$P_{i+n}$

$OS_{i+n}$

BIOS

$UC_O$ | ROM
F1,F2 | HDD

RAM

$CK_O = CK_R$

MT(PAM)

## FIG.4

**EP 1 324 176 B1**

**Documents brevets cités dans la description**

- FR 2767935 A